Europäisches Patentamt

(19) European Patent Office    (11) Publication number:    **0 168 727**

Office européen des brevets    **B1**

(12)    **EUROPEAN PATENT SPECIFICATION**

(45) Date of publication of patent specification: **26.04.89**    (51) Int. Cl.⁴: **B 23 D 21/10**

(21) Application number: **85108359.2**

(22) Date of filing: **05.07.85**

(54) A tube cutter for cutting two concentric tubes bulged together.

(30) Priority: **20.07.84 US 632978**

(43) Date of publication of application:
**22.01.86 Bulletin 86/04**

(45) Publication of the grant of the patent:
**26.04.89 Bulletin 89/17**

(84) Designated Contracting States:
**BE DE FR GB IT SE**

(56) References cited:
**US-A- 554 028**
**US-A-1 857 493**
**US-A-2 065 138**
**US-A-2 448 578**
**US-A-2 571 916**
**US-A-2 937 440**
**US-A-2 983 043**
**US-A-3 252 218**
**US-A-3 608 194**
**US-A-3 731 381**
**US-A-3 791 466**

(73) Proprietor: **WESTINGHOUSE ELECTRIC
CORPORATION**
**Westinghouse Building Gateway Center**
**Pittsburgh Pennsylvania 15222 (US)**

(72) Inventor: **Cuba, Gary William**
**312 Clearview Drive**
**Hopkins South Carolina 29061 (US)**
Inventor: **Laughlin, Edward Nelson**
**38 Cornet Drive**
**Columbia South Carolina 29206 (US)**

(74) Representative: **Patentanwälte Dipl.-Ing. R.
Holzer Dipl.-Ing. (FH) W. Gallo**
**Ludwigstrasse 26**
**D-8900 Augsburg (DE)**

Courier Press, Leamington Spa, England.

## Description

The present invention relates generally to tube cutters and, more particularly, to an improved tube cutter for cutting off a tube section having a circumferential bulge, such as a composite tube section formed by two concentric tubes which have been mechanically joined together by circumferential bulging, as is a common practice in the nuclear reactor industry in constructing a basic fuel assembly structure.

As shown in U.S. Patent No. 3,791,466, the basic fuel assembly structure for a nuclear reactor comprises a skeleton assembly made up of longitudinally extending hollow tubes or thimbles composed of zirconium base alloy, such as Zircaloy, and held in place by transversely extending Inconel or stainless steel grids disposed between stainless steel end nozzles at the top and bottom of the structure. The tubes serve as guide thimbles for cylindrical control elements strategically located in a square array of fuel rods held in place by spring fingers on the "egg-crate" grids. The guide thimbles are attached to the top and bottom nozzles, and the grids are axially spaced along the guide thimbles and mechanically attached thereto by bulge-expanding onto the guide thimble sleeve which is welded to the grid.

By virtue of their Zircaloy strap design, these grid assemblies contain inherently high material costs, and therefore it is economically desirable to salvage them rather than to let them become non-functional scrap. However, due to the specific design and construction of these assemblies, salvage is complicated by several problems, namely: the grids are permanently affixed to the skeleton structural (thimble) tubes by mechanical bulges (deformations) between the sleeves, which are welded to the grids and to the thimbles; the bulges are located very close to the grid strap plane, which is perpendicular to the assembly axis and limits normal access; clearances are severely limited by thimble-to-thimble centerline spacings which are typically less than 20 mm between neighboring thimble outside diameter surfaces; and the grids must be protected from vibration, shock, and other forces which could have a deleterious effect on their structural integrity.

There are several tube cut-off tools on the market, such as the ones disclosed, in U.S. Patents Nos. 554,028; 1,857,493; 2,448,578; 2,571,916; 2,937,440; 2,983,043; and 3,608,194; however, none of these prior art cutters, for one reason or another, completely satisfies the tube cutting needs set forth above. In particular, a need exists for an improved tube cutter capable of cutting a tube section where diametrical clearances and access are severely limited.

It is the principal object of the invention to provide such an improved tube cutter, and the invention accordingly resides in a cutter mechanism for making a circumferential cut through a tube section adjacent to a circumferential bulge thereof, comprising:

(a) an elongate housing formed by at least two separate mateable housing portions each having therein a longitudinal recess and a transverse recess, which longitudinal recesses and which transverse recesses of the several housing portions defining, respectively, an axial bore (B) through, and a circumferential groove (G) in, said housing when the housing portions are mated together;

(b) means for clamping said separate housing portions together in mating relationship with respect to each other such as to form said housing about a tube section to be cut whereby a circumferential bulge of the latter may be disposed within said circumferential groove (G); and

(c) cutting means disposed on said housing at a location between one end thereof and said circumferential groove (G), said cutting means being extendable into said bore (B) to make said circumferential cut upon rotation of said housing relative to a respective tube section.

This improved tube cutter enables a cut to be made through the tube section adjacent the bulge portion that joins the two concentric tubes together while protecting the grids from vibration, shock, and other forces which could have a deleterious effect on their structural integrity.

A preferred embodiment of the invention will now be described, by way of example only, with reference to the accompanying drawings, in which:

Figure 1 is a schematic illustration of the cutter mechanism of the invention as used on a conventional nuclear reactor fuel assembly being shown in a vertically foreshortened, elevational view and with parts broken away to more clearly show the disposition of the cutter mechanism;

Figure 2 is an elevational view showing the cutter mechanism removed from the fuel assembly and assembled in its operative mode on a composite tube section;

Figure 3 is a top plan view of the cutter mechanism as seen along line 3-3 of Figure 2;

Figure 4 is a sectional view, as taken along line 4-4 of Figure 3, of the cutter mechanism disassembled from the composite tube section; and

Figure 5 is a sectional view, as taken along line 5--5 of Figure 3, of the cutter mechanism removed from the composite tube section and showing both housing portions and the cutter bits.

In the following description, like reference characters designate like or corresponding parts throughout the several views, and terms, such as "forward", "rearward", "left", "right", "upwardly", "downwardly", and the like, are. employed as words of convenience not to be construed in a limiting sense.

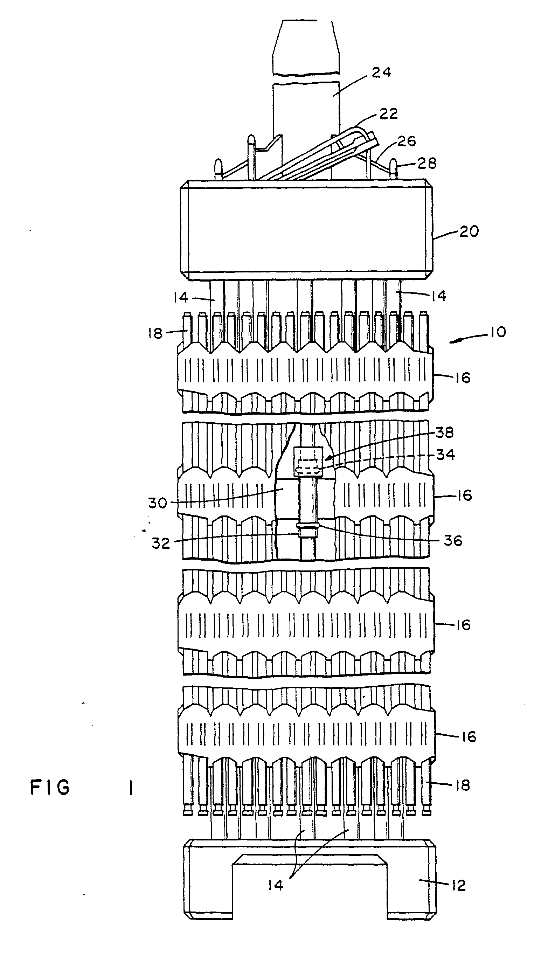

Referring now to the drawings, and particularly to Figure 1, the fuel assembly 10 illustrated therein is of a conventional type such as used in pressurized water reactors. Basically, it comprises a lower end structure or bottom nozzle 12 for supporting the assembly on a lower core plate (not shown) in the core region of a nuclear reactor (not shown); a plurality of guide tubes or thimbles 14 longitudinally extending upwardly from the bottom nozzle 12; a plurality of transverse grids 16 axially spaced along the guide thimbles 14; an organized array of elongate fuel rods 18 transversely spaced apart and supported by the grids 16; and an upper end structure or top nozzle 20 attached to the upper ends of the guide thimbles 14 to form an integral assembly capable of being conventionally handled without damaging the assembly components. The top nozzle 20 is formed of a transversely extending adapter plate having upstanding sidewalls secured to the peripheral edges thereof in defining an enclosure or housing having an upper annular flange to which leaf springs 22 (only one of which is shown in Figure 1) are suitably clamped. The leaf springs 22 cooperate with the upper core plate (not shown) in a conventional manner to prevent hydraulic lifting of the fuel assembly 10, caused by upward coolant flow, while allowing for changes in fuel assembly length due to core-induced thermal expansion and the like. Disposed within the opening defined by the sidewalls of the top nozzle 22 is a conventional rod cluster control assembly 24 having radially extending flukes 26 connected to the upper ends of the control rods 28 for vertically moving the control rods in the guide thimbles 14 in a well-known manner.

To form the fuel assembly 10, the transverse grids 16 are attached to the guide thimbles at predetermined axially spaced locations thereon; the fuel rods 18 are inserted through the grids 16; the lower nozzle 12 is suitably attached to the lower ends of the guide thimbles 14; and then the top nozzle 20 is attached to the upper ends of the guide thimbles 14. The grids 16 are formed of interleaved straps 30 (only one of which is shown) arranged in an egg-crate configuration defining individual cells through which extend the respective fuel rods 18. In the specific fuel assembly 10 illustrated, the grids 16 are attached to the guide thimbles 14 by short sleeves 32 each of which is mounted in a grid cell and has inserted therein a guide thimble to which it is attached by means of upper and lower expansion bulges 34, 36 which mechanically secure the sleeves 32 and, therefore, the grid 16 to the guide thimbles 14. As known in the art, this fastening technique, known as bulge-fitting, is customarily used in joining together tubular members made of dissimilar materials difficult to weld or braze.

As explained earlier, it is economically desirable to disassemble a malfunctioning fuel assembly and salvage some of its expensive components, such as the grid structures 16. However, due to the diametrical clearances between the guide thimbles 14 and the vertical space between grids 16, access to the mechanical bulge joints 34, 36 is severely limited, which heretofore has made it practically impossible to disassemble a fuel assembly, let alone disassembling it without damaging the structural integrity of the grids 16 to an extent precluding re-use thereof. The cutter mechanism generally designated herein with reference numeral 38 overcomes this problem.

It should be noted that, although the tube cutter 38 is shown herein as employed with a nuclear fuel assembly 10, it is not so limited in its use and can be employed for cutting or severing any tube section having a circumferential bulge portion, such as a composite tube section wherein a first tube (guide thimble 14) is inserted in a second tube (sleeve 32) and the tubes (14, 32) are joined together by forming a concentric circumferential bulge or bulges (34, 36) and wherein the tube section is to be cut adjacent the bulged portion.

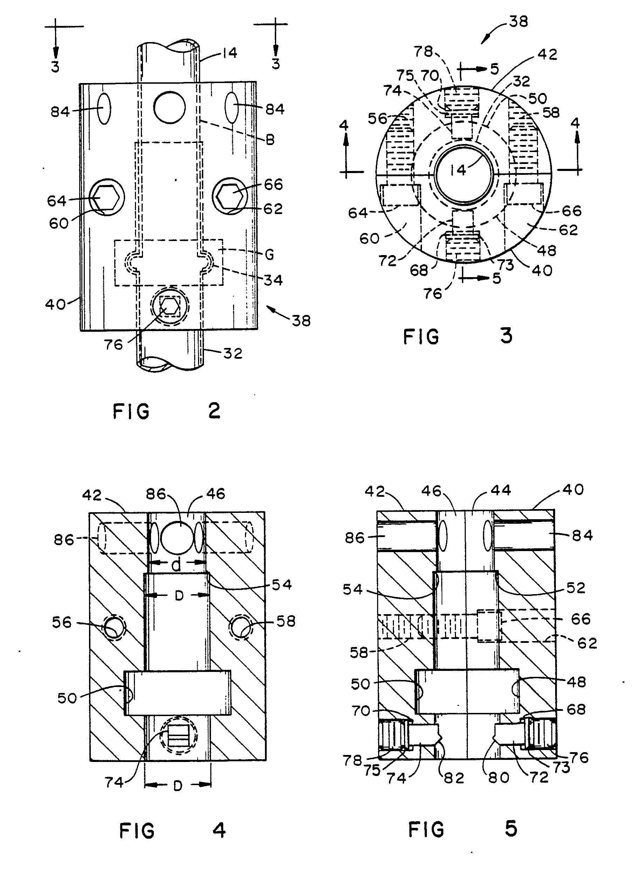

Referring now to Figures 2 to 5 the tube cutter 38 is shown in Figure 2 in its operative mode, i.e. assembled on a composite tube section represented by a sleeve 32 (outer tube) and a guide thimble 14 (inner tube) inserted therein and with the guide thimble 14 and the sleeve 32 mechanically joined together by a circumferential bulge 34. For clarity and simplicity, the composite tube section will be referred to hereinafter by the number 14, 32.

As best seen from Figures 2 and 3, the tube cutter 38 comprises an elongate housing, preferably formed of two halves or mateable portions 40, 42 having respective longitudinal matching recesses 44, 46 which define an axial bore (hereinafter referred to by the letter "B") through the housing when the portions 40, 42 are mated together. The mateable portions 40, 42 are substantially identical, being of hardenable stainless steel and semicylindrical in cross-section such that, when joined together, they form a hollow cylindrical housing.

As best seen from Figure 5, the housing portions 40, 42 have transverse matching recesses 48 and 50, respectively, which together define a circumferential groove (hereinafter referred to by the letter "G") when the two housing portions are mated together. The purpose of the groove G is to accommodate the bulge 34 when the housing portions 40, 42 are assembled on the composite tube section 14, 32. As seen from Figures 2, 4 and 5, each of the recesses 48, 50 is rectangular in profile; however, each could be curved at the bottom such as to provide a circumferential groove G generally conforming in shape to that bulge 34.

Additionally, the axial bore B formed through the housing 40, 42 by the longitudinal recesses 44, 46 is stepped or offset such as to provide an upper bore section housing a smaller diameter "d" (see Figure 4) and a lower bore section having a larger diameter "D" segment. The junction of the smaller diameter "d" segment with the larger diameter "D" segment forms a lip 52 in housing portion 40 and a lip 54 in housing portion 42, which together define an annular lip or shoulder 52, 54 when the two housing portions 40, 42 are mated together. The larger diameter "D" segment is located to encircle the outer tube, or sleeve 32, whereas the smaller diameter "d" segment is located to encircle the inner tube, or guide thimble 14, the annular lip 52, 54 being adapted to abut the end of the sleeve 32 so as to axially position and retain the tube cutter 38 on the composite tube section 14, 32 when the housing portions 40, 42 are clamped together, thus maintaining cutter-to-sleeve relative geometry and reducing unusual forces on the grid 16 during the cutting operation.

For joining the two housing portions 40, 42 together, there are provided clamping means comprising internally threaded holes 56, 58 in the housing portion 42; through-holes 60, 62 in the other housing portion 40; and externally threaded fasteners 64, 66 extending through the through-holes 60, 62 and threadedly engaged in associated ones of the internally threaded holes 56, 58 so as to clamp the mating housing portions 40, 42 about the composite tube section 14, 32, as shown in Figure 3. In this clamped or operating mode position of the tube cutter 38, the composite tube section 14, 32 extends through the axial bore B, with the "D" diameter segment closely fitting about the sleeve 32, the "d" diameter segment closely fitting about the thimble 14, the annular lip 52, 54 abutting the end of the sleeve 32, and the bulge 34 disposed within the circumferential groove G. The threaded holes 56, 58 are located on opposite sides of the longitudinal recess 46 of housing portion 42 and are disposed approximately midway between its axial length (see Figure 4), whereas the through-holes 60, 62 are located on opposite sides of the longitudinal recess 44 of housing portion 40 and are disposed approximately midway between its axial length (see Figures 2 and 3).

As best seen from Figure 5, spaced below the circumferential groove G and circumferentially located centrally of the respective housing portions 40, 42 are internally threaded and broached holes 68, 70 formed in the housing portions 40 and 42, respectively. Disposed in the broached holes 68, 70 are cutter bits 72 and 74, respectively, which are radially extendable into the axial bore B through rotation of corresponding set screws 76, 78. Clockwise rotation of the screws 76, 78 will advance the cutter bits 72, 74 into the composite tube section 14, 32 (workpiece). Preferably, the tube cutter 38 utilizes two cutter bits 72, 74 for increased cutting efficiency as shown; however, only one such cutter bit would suffice to make the desired cut. Preferably, the cutter bits 72, 74 are of hardened steel and have respective shoulders 73, 75 (see Figure 5) formed on their outer ends to prevent the cutter bits 72, 74 from falling through the broached holes 68, 70 as the cutter halves are engaged and disengaged from the workpiece. The inner or cutting end of each cutter bit 72, 74 is specially ground to simulate the general configuration of standard tube cutting wheels, i.e. it is ground to a simple V-shaped configuration providing a cutting edge 80 and 82, respectively.

In the preferred embodiment, the tube cutter 38 is operated manually so as to prevent uncontrolled and excessive loading on the grid 16 during the cutting operation. In order to facilitate manual rotation of the tube cutter 38 about the composite tube section 14, 32 for making the cut, each housing portion 40, 42 is provided with at least one and preferably a plurality of radial bores 84 and 86 adapted to receive a corresponding end portion of a torque lever or extension bar (not shown). As clearly seen from Figures 2, 4 and 5, the bores 84, 86 are located in the upper end portion, or "d" diameter segment, of the housing 40, 42 whereas the cutter bits 72, 74 are located adjacent the lower end of the "D" diameter segment of the housing 40, 42.

From the above description, it will be appreciated that the tube cutter 38 embodying the invention can be used in applications where diametrical clearances and access are severely limited, such as in the disassembling and salvaging of nuclear fuel assemblies. The split construction of the cutter 38 enables it to be clamped together over continuous tubes, such as guide thimbles 14. Furthermore, the provision of the circumferential groove G which accommodates the bulge area 34, and the specific location of the cutter bits 72, 74 relative to the groove G, enable the tube cutter 38 to be positioned close to a grid strap such as strap 30 (Figure 1) such that the cut through the composite tube section 14, 32 can be made in the closely spaced area and adjacent the bulge 34.

## Claims

1. A cutter mechanism for making circumferential cut through a tube section adjacent to a circumferential bulge thereof, comprising:

(a) an elongate housing formed by at least two separate mateable housing portions (40, 42) each having therein a longitudinal recess (44, 46) and a transverse recess (48, 50), which longitudinal recesses and which transverse recesses of the several housing portions define, respectively, an axial bore (B) through, and a circumferential groove (G) in, said housing when the housing portions are mated together;

(b) means (56, 58; 60, 62; 64, 66) for clamping said separate housing portions (40, 42) together in mating relationship with respect to each other such as to form said housing about a tube section (14, 32) to be cut whereby a circumferential bulge (34) of the latter may be disposed within said circumferential groove (G); and

(c) cutting means (72, 74) disposed on said housing at a location between one end thereof and said circumferential groove (G), said cutting means being extendable into said bore (B) to make said circumferential cut upon rotation of said housing relative to a respective tube section.

2. A cutter mechanism according to claim 1, characterized in that said housing (40, 42) includes means (84, 86) for facilitating rotation of the housing about said tube section (14, 32) for effecting said cut.

3. A cutter mechanism according to claim 2, characterized in that the means (84, 86) for facilitating rotation comprises at least one radial bore formed through each housing portion (40, 42) and adapted to receive an end portion of a manually operable rotating tool.

4. A cutter mechanism according to claim 2 or 3, characterized in that said means (84, 86) for facilitating rotation of said housing is located between said circumferential groove (G) and the end of said housing opposite to said one end thereof.

5. A cutter mechanism according to any one of the preceding claims, characterized in that the clamping means comprise a pair of internally threaded holes (56, 58) formed transversely through one (42) of said housing portions and spaced laterally from the longitudinal recess (42) therein at opposite sides thereof, a pair of through-holes (60, 62) formed transversely through the other (40) of said housing portions for axial alignment of said through-holes with the respective threaded holes (56, 58) when the housing portions (40, 42) are mated, and a pair of externally threaded fasteners (64, 66) adapted to be inserted through the respective through-holes (60, 62) and threadedly engaged with the internally threaded holes (56, 58) so as to matingly clamp the housing portions together.

6. A cutter mechanism according to any one of the preceding claims, characterized in that said cutting means comprises at least one cutter bit (72 or 74) slideably disposed in a radial bore (68 or 70) formed in one of said housing portions (40, 42).

7. A cutter mechanism according to any one of claims 1 to 5, characterized in that said cutting means comprises two cutter bits (72, 74) slideably disposed in bores (68, 70) extending radially through the respective housing portions (40, 42).

8. A cutter mechanism according to claim 7, characterized in that said bores (68, 70) together with the respective cutter bits slideably disposed therein are diametrically opposed to each other when the housing portions (40, 42) are mated.

9. A cutter mechanism according to claim 7 or 8, characterized in that said or each cutter bit (72 or 74) has associated therewith means (76, 78) operable to advance the associated cutter bit into said bore (B).

10. A cutter mechanism according to any one of the preceding claims when said tube section consists of an outer tube and an inner tube partially inserted into the outer tube and joined thereto by said circumferential bulge, characterized in that said longitudinal recess (44 or 46) of each housing portion (40, 42) is stepped (52 or 54) such that, when the housing portions are mated together, said axial bore (B) has a large-diameter segment for encircling said outer tube (32), and a small-diameter segment for encircling said inner tube (14).

11. A cutter mechanism according to claim 10, characterized in that said circumferential groove (G) is located within said large-diameter segment of the axial bore (B).

**Patentansprüche**

1. Schneidevorrichtung zur Herstellung eines Umfangsschnittes durch einen Rohrabschnitt angrenzend an eine umfangsmäßige Ausbauchung, mit:

a) einem länglichen Gehäuse, das durch mindestens zwei gesonderte zusammensetzbare Gehäuseteile (40, 42) gebildet ist, die jeweils eine längsverlaufende Aussparung (44, 46) und eine querverlaufende Aussparung (48, 50) aufweisen, wobei die längsverlaufenden Aussparungen und die querverlaufenden Aussparungen der Gehäuseteile bei zusammengesetzten Gehäuseteilen eine Axialbohrung (B) und eine Umfangsnut (G) in dem Gehäuse bilden,

b) Mitteln (56, 58; 60; 62; 64, 66) zum Zusammenspannen der passend aufeinandergesetzten gesonderten Gehäuseteile (40, 42) zur Bildung des Gehäuses um einen zu schneidenden Rohrabschnitt (14, 32) herum, derart, daß eine umfangsmäßige Ausbauchung (34) des Rohrabschnitts in der Umfangsnut (G) zu liegen kommt, und

c) an dem Gehäuse an einer Stelle zwischen dessen einem Ende und der Umfangsnut (G) angeordneten Schneidorganen (72, 74), die in die Bohrung (B) hinein vorschiebbar sind, um den Umfangsschnitt bei Drehung des Gehäuses relativ zu dem betreffenden Rohrabschnitt auszuführen.

2. Schneidevorrichtung nach Anspruch 1, dadurch gekennzeichnet, daß das Gehäuse (40, 42) Mittel (84, 86) zum Erleichtern des Drehens des Gehäuses um den Rohrabschnitt (14, 32) herum zur Ausführung des Schnittes aufweist.

3. Schneidevorrichtung nach Anspruch 2, dadurch gekennzeichnet, daß die Mittel (84, 86) zum Erleichtern der Drehung mindestens eine durch jeden Gehäuseteil (40, 42) verlaufende Radialbohrung zur Aufnahme eines Endabschnittes eines manuell betätigbaren Drehwerkzeugs aufweisen.

4. Schneidevorrichtung nach Anspruch 2 oder 3, dadurch gekennzeichnet, daß die Mittel (84, 86) zum Erleichtern der Drehung des Gehäuses zwischen der Umfangsnut (G) und dem bezüglich des genannten einen Gehäuseendes anderen Gehäuseende angeordnet sind.

5. Schneidevorrichtung nach einem der vorhergehenden Ansprüche, dadurch gekennzeichnet, daß die Zusammenspannmittel zwei Innengewindebohrungen (56, 58), die quer durch eines (42) der genannten Gehäuseteile und mit seitlichem Abstand von dessen längsverlaufender Ausnehmung (42) auf gegenüberliegenden Seiten derselben verlaufen, zwei Durchgangsbohrungen (60, 62), die quer durch das andere (40) der Gehäuseteile verlaufen und bei zusammengesetzten Gehäuseteilen (40, 42) axial mit den Gewindebohrungen (56, 58) fluchten, und zwei mit Außengewinde versehene Schrauben (64, 66) aufweisen, die durch die Durchgangsbohrungen (60, 62) einführbar und in die Gewindebohrungen (56, 58) einschraubbar sind, um die Gehäuseteile aufeinanderpassend zusammenzuspannen.

6. Schneidevorrichtung nach einem der vorhergehenden Ansprüche, dadurch gekennzeichnet, daß die Schneidorgane mindestens eine Schneidspitze (72 oder 74) aufweist, die verschiebbar in einer Radialbohrung (68 oder 70) in einem der Gehäuseteile (40, 42) angeordnet ist.

7. Schneidevorrichtung nach einem der Ansprüche 1 bis 5, dadurch gekennzeichnet, daß die Schneidorgane zwei Schneidspitzen (72, 74) aufweisen, die verschiebbar in Bohrungen (68, 70) angeordnet sind, die radial durch die betreffenden Gehäuseteile (40, 42) hindurchverlaufen.

8. Schneidevorrichtung nach Anspruch 7, dadurch gekennzeichnet, daß die Bohrungen (68, 70) zusammen mit den darin verschiebbaren Schneidspitzen bei zusammengesetzten Gehäuseteilen (40, 42) einander diametral gegenüberliegend angeordnet sind.

9. Schneidevorrichtung nach Anspruch 7 oder 8, dadurch gekennzeichnet, daß die oder jede Schneidspitze (72 oder 74) zugeordnete Mittel (76, 78) aufweist, die im Sinne eines Zustellens der betreffenden Schneidspitze in die Bohrung (B) betätigbar sind.

10. Schneidevorrichtung nach einem der vorhergehenden Ansprüche, wenn der genannte Rohrabschnitt aus einem äußeren Rohr und einem teilweise in das äußere Rohr eingeführten und damit durch die genannte umfangsmäßige Ausbauchung verbundenen inneren Rohr besteht, dadurch gekennzeichnet, daß die längsverlaufende Aussparung (44, 46) jedes Gehäuseteils (40, 42) abgestuft (52, 54) ist, derart, daß bei zusammengesetzten Gehäuseteilen die Axialbohrung (B) einen Abschnitt größeren Durchmessers zum Umschließen des äußeren Rohres (32) und einen Abschnitt kleineren Durchmessers zum Umschließen des inneren Rohres (14) aufweist.

11. Schneidevorrichtung nach Anspruch 10, dadurch gekennzeichnet, daß die Umfangsnut (G) in dem Abschnitt größeren Durchmessers der Axialbohrung (B) gelegen ist.

## Revendications

1. Mécanisme de coupe pour effectuer une opération de coupe circonférentielle d'une section de tube adjacente à un bourrelet circonférentiel de ce dernier, comportant:

(a) une enveloppe allongée constituée par au moins deux parties (40, 42) d'enveloppe séparées ayant la faculté de s'accoupler, chacune étant pourvue à l'intérieur d'un évidement longitudinal (44, 46) et d'un évidement transversal (48, 50), lesquels évidements longitudinaux et évidements transversaux des diverses parties d'enveloppe délimitent, respectivement, un alésage (B) dans le sens de l'axe, et une gorge circonférentielle (G), ménagés à travers et dans ladite enveloppe lorsque les parties d'enveloppe sont accouplées l'une à l'autre;

(b) des moyens (56, 58; 60, 62; 64, 66) pour assujettir l'une à l'autre lesdites parties séparées (40, 42) d'enveloppe en liaison d'accouplement de l'une par rapport à l'autre de manière à constituer ladite enveloppe autour d'une section (14, 82) de tube devant être coupé de sorte qu'un bourrelet circonférentiel (34) de ce dernier puisse être disposé à l'intérieur de ladite gorge circonférentielle (G); et

(c) des moyens (72, 74) de coupe disposés sur ladite enveloppe à un emplacement situé entre une première extrémité de cette dernière et ladite gorge circonférentielle (G), lesdits moyens de coupe étant extensibles jusqu'à l'intérieur dudit alésage (B) de façon à effectuer ladite opération de coupe circonférentielle lors de la rotation de ladite enveloppe par rapport à un élément de tube correspondant.

2. Mécanisme de coupe selon la revendication 1, caractérisé en ce que ladite enveloppe (40, 42) comprend des moyens (84, 86) destinés à faciliter la rotation de l'enveloppe autour de ladite section (14, 32) de tube pour effectuer ladite opération de coupe.

3. Mécanisme de coupe selon la revendication 2, caractérisé en ce que les moyens (84, 86) destinés à faciliter la rotation comprennent au moins un alésage radial ménagé à travers chaque partie (40, 42) d'enveloppe et approprié pour recevoir une partie d'extrémité d'un outil rotatif pouvant être actionné manuellement.

4. Mécanisme de coupe selon la revendication 2 ou la revendication 3, caractérisé en ce que lesdits moyens (84, 86) destinés à faciliter la rotation de ladite enveloppe sont placés entre ladite gorge circonférentielle (G) et l'extrémité de ladite enveloppe opposée à ladite première extrémité de cette enveloppe.

5. Mécanisme de coupe selon l'une quelconque des revendications précédentes, caractérisé en ce que les moyens d'assujettissement comportent une paire de trous taraudés intérieurement (56, 58) ménagés transversalement à travers l'une (42) desdites parties d'enveloppe et espacés latéralement de l'évidement longitudinal (44, 46) qui s'y trouve, à des côtés opposés de ce dernier, une paire de trous traversants (60, 62) ménagés transversalement à travers l'autre (40) desdites parties d'enveloppe de façon que lesdits trous traversants soient alignés longitudinalement avec les trous taraudés correspondants (56, 58) lorsque les parties (40, 42) d'enveloppe sont accouplées, et une paire de pièces d'assemblage (64, 66) filetées extérieurement appropriées pour être insérées à travers les trous traversants (60, 62) correspondants et vissées dans les trous taraudés intérieurement (56, 58) de manière à assujettir l'accouplement mutuel des parties d'enveloppe.

6. Mécanisme de coupe selon l'une quelconque des revendications précédentes, caractérisé en ce que lesdits moyens de coupe comportent au moins un organe de coupe (72 ou 74) disposé avec possibilité de coulissement dans un alésage radial (68 ou 70) ménagé dans l'une desdites parties (40, 42) d'enveloppe.

7. Mécanisme de coupe selon l'une quelconque des revendications 1 à 5, caractérisé en ce que lesdits moyens de coupe comportent deux organes de coupe (72, 74) disposés avec possibilité de coulissement dans des alésages (68, 70) s'étendant dans le sens radial à travers les parties (40, 42) d'enveloppe correspondantes.

8. Mécanisme de coupe selon la revendication 7, caractérisé en ce que lesdits alésages (68, 70) ainsi que les organes de coupe correspondants qui sont disposés à l'intérieur de ces alésages avec la possibilité de coulisser sont diamétralement opposés l'un à l'autre lorsque les parties (40, 42) d'enveloppe sont accouplées.

9. Mécanisme de coupe selon la revendication 7 ou la revendication 8, caractérisé en ce que ledit organe de coupe ou chaque organe de coupe (72 ou 74) est muni de moyens (76, 78) qui lui sont associés et pouvant fonctionner de façon à faire avancer l'organe de coupe associé jusque dans ledit alésage (B).

10. Mécanisme de coupe selon l'une quelconque des revendications précédentes, lorsque ledit élément de tube consiste en un tube extérieur et un tube intérieur partiellement inséré dans le tube extérieur et joint à ce dernier par ledit bourrelet circonférentiel, caractérisé en ce que ledit évidement longitudinal (44 ou 46) de chaque partie (40, 42) d'enveloppe comporte un gradin (52 ou 54) tel que, lorsque les parties d'enveloppe sont accouplées l'une à l'autre, ledit alésage axial (B) comporte une portion de grand diamètre destinée à entourer ledit tube extérieur (32), et une portion de petit diamètre destinée à entourer ledit tube intérieur (14).

11. Mécanisme de coupe selon la revendication 10, caractérisé en ce que ladite gorge circonférentielle (G) est située à l'intérieur de ladite portion de grand diamètre de l'alésage axial (B).

FIG 1

FIG 2

FIG 3

FIG 4

FIG 5

2